# EUROPÄISCHE PATENTANMELDUNG

(11) **EP 4 461 395 A1**
(43) Veröffentlichungstag der Anmeldung: **13.11.2024**
(21) Anmeldenummer: 23173093.8
(22) Anmeldetag: 12.05.2023
(51) Int. Cl.: B01D 3/32, B01D 3/00

(54) **VERFAHREN UND VORRICHTUNG ZUR TRENNUNG EINES EINEN LEICHTSIEDER UND EINEN SCHWERSIEDER UMFASSENDEN GEMISCHES MITTELS EINER REKTIFIKATIONSKOLONNE**

(71) Anmelder: Limón GmbH, 34117 Kassel (DE)
(72) Erfinder: MALIGA, Jochem, 20099 Hamburg (DE)
(74) Vertreter: REHBERG HÜPPE + PARTNER

(57) **Zusammenfassung**

Zur Trennung eines einen Leichtsieder (26) und einen Schwersieder (29) umfassenden Gemisches (1) unter Verwendung einer Rektifikationskolonne (2), wird ein erster Anteil einer unten aus der Rektifikationskolonne (2) abgelaufenen Flüssigkeit verdampft und der verdampfte Anteil in die Rektifikationskolonne (2) zurückgeführt. Ein nicht verdampfter zweiter Anteil der abgelaufenen Flüssigkeit wird als der Schwersieder (29) abgezogen; und zumindest ein schwerkondensierender Anteil eines oben aus der Rektifikationskolonne (2) austretenden Dampfs wird als der Leichtsieder (26) abgezogen. Zum Verdampfen des ersten Anteils wird die abgelaufene Flüssigkeit in einer ersten Verdampfungsstufe (11) bis auf eine erste Temperatur erwärmt, wobei eine erste Teilmenge des ersten Anteils verdampft; und die am Ende der ersten Verdampfungsstufe (11) verbliebene Flüssigkeit wird in einer zweiten Verdampfungsstufe (6) bis auf eine zweite Temperatur erwärmt, die um mindestens 10 K höher ist als die erste Temperatur, wobei eine zweite Teilmenge des ersten Anteils verdampft. Die erste Teilmenge des ersten Anteils wird in einen oberen Bereich (5) der Rektifikationskolonne (2) zurückgeführt, und die zweite Teilmenge des ersten Anteils wird in einen unteren Bereich (8) der Rektifikationskolonne (2) zurückgeführt.

## Beschreibung

### TECHNISCHES GEBIET DER ERFINDUNG

Die Erfindung bezieht sich auf ein Verfahren zur Trennung eines einen Leichtsieder und einen Schwersieder umfassenden Gemisches unter Verwendung einer Rektifikationskolonne sowie auf eine Vorrichtung zur Durchführung dieses Verfahrens. Genauer bezieht sich die Erfindung auf ein Verfahren mit den Merkmalen des Oberbegriffs des Patentanspruchs 1 und auf eine Vorrichtung mit den Merkmalen des Oberbegriffs des Patentanspruchs 8.

### STAND DER TECHNIK

Ein Verfahren mit den Merkmalen des Oberbegriffs des Patentanspruchs 1 und eine Vorrichtung mit den Merkmalen des Oberbegriffs des Patentanspruchs 8 sind aus der DE 10 2007 040 067 B3 bekannt. Konkret wird ein Verfahren zur Stofftrennung durch Zusammenschaltung einer Rektifikationskolonne, einer Dampfpermeationsanlage und mindestens zweier Brüdenverdichter beschrieben. Ein Dampfgemisch vom Kopf der Rektifikationskolonne wird in zwei Teilströme aufgeteilt. Der erste Teilstrom wird in einem ersten Brüdenverdichter komprimiert. Der erhaltene erste Dampf wird in einem ersten Wärmetauscher zu Beheizung des Sumpfes der Kolonne kondensiert. Das dabei anfallende erste Kondensat wird als Rücklauf auf den Kopf der Kolonne geführt. Dem zweiten Teilstrom des Dampfgemisches wird in der Dampfpermeationsanlage eine Komponente entzogen, und der nach der Dampfpermeation erhaltene Produktdampf wird in einem zweiten Brüdenverdichter komprimiert, und sein Wärmeinhalt wird in einem zweiten Wärmetauscher zur Beheizung des Sumpfs der Rektifikationskolonne benutzt. Das dabei anfallende zweite Kondensat wird durch Vorwärmung des Zulaufs zur Rektifikationskolonne gekühlt. Die Betriebsdaten der Rektifikationskolonne und des ersten Brüdenverdichters werden so aufeinander abgestimmt, dass die Temperatur des von dem ersten Brüdenverdichter komprimierten Dampfs nach Sättigung etwa 3 - 15° höher liegt als die Temperatur im Sumpf der Rektifikationskolonne. Die Druckerhöhung in dem zweiten Brüdenverdichter unterscheidet sich von der Druckerhöhung in dem ersten Brüdenverdichter, um den Druckverlust in der Dampfpermeation zu kompensieren und die gleiche Temperatur für die Beheizung der Rektifikationskolonne am Ausgang beider Brüdenverdichter zu erreichen. Auf diese Weise soll die für den Betrieb der Rektifikationskolonne benötigte thermische Energie weitgehend aus dem am Kopf der Rektifikationskolonne abgezogenen Dampf zurückgewonnen werden. So soll zusätzliche thermische Energie nur für das Anfahren der Rektifikationskolonne und zur Deckung unvermeidlicher Wärmeverluste benötigt werden. Neben dieser zusätzlichen thermischen Energie verbraucht das bekannte Verfahren jedoch erhebliche elektrische Energie für den Antrieb der Brüdenverdichter.

### AUFGABE DER ERFINDUNG

Der Erfindung liegt die Aufgabe zugrunde, ein Verfahren zur Trennung eines einen Leichtsieder und einen Schwersieder umfassenden Gemisches unter Verwendung einer Rektifikationskolonne und eine entsprechende Vorrichtung aufzuzeigen, bei denen der Gesamtbedarf an Energie reduziert ist.

### LÖSUNG

Die Aufgabe der Erfindung wird durch ein Verfahren mit den Merkmalen des Patentanspruchs 1 und durch eine Vorrichtung mit den Merkmalen des Patentanspruchs 8 gelöst. Die weiteren Patentansprüche betreffen bevorzugte Ausführungsformen des erfindungsgemäßen Verfahrens und der erfindungsgemäßen Vorrichtung.

### BESCHREIBUNG DER ERFINDUNG

In dem erfindungsgemäßen Verfahren zur Trennung eines einen Leichtsieder und einen Schwersieder umfassenden Gemisches unter Verwendung einer Rektifikationskolonne wird ein erster Anteil einer unten aus der Rektifikationskolonne abgelaufenen Flüssigkeit verdampft und der verdampfte Anteil wird in die Rektifikationskolonne zurückgeführt. Ein nicht verdampfter zweiter Anteil der abgelaufenen Flüssigkeit wird als der Schwersieder abgezogen, und zumindest ein schwer kondensierender Anteil eines oben aus der Rektifikationskolonne austretenden Dampfs wird als der Leichtsieder abgezogen. Zum Verdampfen des ersten Anteils wird die abgelaufene Flüssigkeit in einer ersten Verdampfungsstufe bis auf eine erste Temperatur erwärmt, wobei eine erste Teilmenge des ersten Anteils verdampft, und wird die am Ende der ersten Verdampfungsstufe verbliebene Flüssigkeit in einer zweiten Verdampfungsstufe bis auf eine zweite Temperatur erwärmt, die um mindestens 10 K größer ist als die erste Temperatur, wobei eine zweite Teilmenge des ersten Anteils verdampft. Die erste Teilmenge des ersten Anteils wird in einen oberen Bereich der Rektifikationskolonne zurückgeführt, und die zweite Teilmenge des ersten Anteils wird in einen unteren Bereich der Rektifikationskolonne zurückgeführt. Der untere Bereich liegt um mindestens einen Kolonnenboden, vorzugsweise mindestens zwei Kolonnenböden und noch mehr bevorzugt um mindestens die Hälfte der Kolonnenböden der Rektifikationskolonne tiefer als der obere Bereich der Rektifikationskolonne.

Bei dem erfindungsgemäßen Verfahren wird die unten aus der Rektifikationskolonne abgelaufene Flüssigkeit, das heißt der Sumpf der Rektifikationskolonne in mindestens zwei aufeinander folgenden Verdampfungsstufen zunächst auf eine niedrigere erste Temperatur und dann auf eine höhere zweite Temperatur erwärmt. Indem bereits in der ersten Verdampfungsstufe bei der ersten Temperatur wesentliche Anteile des in dem Sumpf enthaltenen Leichtsieders verdampft werden, kann die hierfür benötigte Wärmeenergiemenge mit höherem Wirkungsgrad auf Basis von verfügbarer Ab- oder Umweltwärme bereitgestellt werden als bei der höheren zweiten Temperatur. Auf diese Weise sind erhebliche Energieeinsparungen gegenüber einem Verfahren realisierbar, bei dem der gesamte erste Anteil der aus der Rektifikationskolonne abgelaufenen Flüssigkeit, der in die Rektifikationskolonne zurückgeführt wird, in der zweiten Verdampfungsstufe bei der höheren zweiten Temperatur verdampft wird, die erforderlich ist, um den Leichtsieder vollständig von dem Schwersieder zu entfernen, bevor dieser abgezogen wird.

Die erste Temperatur wird vorzugsweise so gewählt, dass sie knapp über der Siedetemperatur des Leichtsieders liegt. Dabei ist die erste Temperatur aber vorzugsweise so viel höher als die Siedetemperatur des Leichtsieders, dass eine wesentliche erste Teilmenge des zurückzuführenden ersten Anteils der aus der Rektifikationskolonne abgelaufenen Flüssigkeit bereits in der ersten Verdampfungsstufe verdampft. Konkret kann die erste Temperatur um 2 Kelvin bis 20 Kelvin über der Siedetemperatur des Leichtsieders liegen. Oft wird sie zwischen 10 K und 20 K über der Siedetemperatur des Leichtsieders liegen. Dabei kann die erste Temperatur unter oder auch bereits über einer Siedetemperatur des Schwersieders liegen. Die zweite Temperatur wird so hoch gewählt, dass der jeweilige Leichtsieder vollständig verdampft ist, bevor der zweite Anteil der aus der Rektifikationskolonne abgelaufenen Flüssigkeit als der Schwersieder abgezogen wird. Konkret kann die zweite Temperatur um 2 Kelvin bis 25 Kelvin über der Siedetemperatur des Schwersieders liegen. Im Vergleich der beiden Temperaturen liegt die zweite Temperatur vorzugsweise um mindestens 25 Kelvin und noch mehr bevorzugt um mindestens 50 Kelvin höher als die erste Temperatur. Je größer der Unterschied der beiden Temperaturen ist, desto größer ist die bei dem erfindungsgemäßen Verfahren erreichbare Energieeinsparung.

Der bei dem erfindungsgemäßen Verfahren abgezogene Leichtsieder kann ein Reinstoff oder ein Stoffgemisch, beispielsweise ein Azeotrop, sein, das anschließend bei einer Wiederholung des erfindungsgemäßen Verfahrens unter anderem Druck und/oder bei anderen Temperaturen weiter aufgetrennt werden kann. Ebenso kann der bei dem erfindungsgemäßen Verfahren abgezogene Schwersieder ein Reinstoff oder ein Stoffgemisch sein, das anschließend bei einer Wiederholung des erfindungsgemäßen Verfahrens unter anderem Druck und/oder bei anderen Temperaturen oder unter Anwendung irgendeines anderen Trennverfahrens weiter aufgetrennt werden kann.

In der ersten Verdampfungsstufe wird der aus der Rektifikationskolonne abgelaufenen Flüssigkeit vorzugsweise eine Wärmeenergiemenge zugeführt, die mindestens genauso groß ist wie eine zweite Wärmeenergiemenge, die der am Ende der ersten Verdampfungsstufe verbliebenen Flüssigkeit in der zweiten Verdampfungsstufe zugeführt wird. Das Verhältnis der ersten Wärmeenergiemenge zu der zweiten Energiemenge ist mehr bevorzugt deutlich größer als 1:1 und beträgt beispielsweise mindestens 2:1 oder 3:1. Je größer die erste Wärmeenergiemenge verglichen mit der zweiten Wärmeenergiemenge ist, desto größer ist die mit dem erfindungsgemäßen Verfahren erreichbare Energieeinsparung.

In der ersten Verdampfungsstufe kann die abgelaufene Flüssigkeit über eine erste Wärmeübertragungsfläche erwärmt werden, die mindestens dreimal und vorzugsweise mindestens zehnmal so groß ist wie eine zweite Wärmeübertragungsfläche, über die die am Ende der ersten Verdampfungsstufe verbliebene Flüssigkeit in der zweiten Verdampfungsstufe erwärmt wird. Das bevorzugte Verhältnis der Wärmeübertragungsflächen ergibt sich zum einen daraus, dass das Volumen der abgelaufenen Flüssigkeit, die in der ersten Verdampfungsstufe zu behandeln ist, größer ist als das Volumen der am Ende der ersten Verdampfungsstufe verbliebenen Flüssigkeit, die in der zweiten Verdampfungsstufe zu behandeln ist. Darüber hinaus soll möglichst viel des insgesamt zu verdampfenden ersten Anteils in Form der ersten Teilmenge des ersten Anteils in der ersten Verdampfungsstufe verdampfen. Dafür muss viel Wärme übertragen werden. Dies geschieht bei der vergleichsweise niedrigen ersten Temperatur vorzugsweis über vergleichsweise große Wärmeübertragungsflächen. Zugleich kann der zweite Anteil der abgelaufenen Flüssigkeit, das heißt der letztlich abgezogene Schwersieder, mindestens dreimal und vorzugsweise mindestens zehnmal so lange in der ersten Verdampfungsstufe verweilen wie in der zweiten Verdampfungsstufe. Auch dies trägt dazu bei, dass möglichst viel von dem Leichtsieder, der in der aus der Rektifikationskolonne abgelaufenen Flüssigkeit noch in dem Schwersieder enthalten ist, in der ersten Verdampfungsstufe und damit unter Einsatz weniger Energie entfernt wird, und nicht erst in der zweiten Verdampfungsstufe.

Konkret kann die abgelaufene Flüssigkeit in der ersten Verdampfungsstufe mit Hilfe von Kondensationswärme eines ersten Wärmeübertragungsmediums erwärmt werden, während die am Ende der ersten Verdampfungsstufe verbliebene Flüssigkeit in der zweiten Verdampfungsstufe mit Hilfe von Kondensationswärme eines sich von dem ersten Wärmeübertragungsmedium unterscheidenden zweiten Wärmeübertragungsmediums erwärmt wird. Die Wärmeübertragungsmedien können sich dabei in ihrer Zusammensetzung und/oder ihrem Druck unterscheiden. So kann das zweite Wärmeübertragungsmedium dieselbe Zusammensetzung wie das erste Wärmeübertragungsmedium haben, aber unter einem erheblich höheren Druck stehen und so bei der zweiten Temperatur kondensieren, die deutlich höher ist als die erste Temperatur, bei der das erste Wärmeübertragungsmedium kondensiert.

Insbesondere kann die abgelaufene Flüssigkeit in der ersten Verdampfungsstufe mit Abwärme aus dem oben aus der Rektifikationskolonne austretenden Dampf erwärmt werden. Dies kann mit Hilfe eines diesen Dampf verdichtenden und damit seine Temperatur anhebenden ersten Brüdenverdichters, bei ausreichender Temperatur dieses Dampfs auch allein mit Hilfe eines ersten Wärmetauschers oder mit Hilfe eines ersten Wärmetauschers oder ersten Kondensators in Kombination mit einer ersten Wärmepumpe erfolgen. Der Wirkungsgrad eines Brüdenverdichters oder einer Wärmepumpe hängt ganz erheblich von der Temperaturdifferenz zwischen der Eingangstemperatur und der Ausgangstemperatur ab, und er sinkt mit größer werdender Temperaturdifferenz. Indem bei dem erfindungsgemäßen Verfahren mit Hilfe des Brüdenverdichters oder der Wärmepumpe zum Erwärmen der aus der Rektifikationskolonne abgelaufenen Flüssigkeit in der ersten Verdampfungsstufe nur eine geringe Temperaturdifferenz bis zu der ersten Temperatur überwunden wird, weist die Wärmepumpe eine sehr hohe Effizienz auf und damit ist das Potential hoher Energieeinsparungen gegeben. Auch die am Ende der ersten Verdampfungsstufe verbliebene Flüssigkeit kann in der zweiten Verdampfungsstufe mit Hilfe eines Brüdenverdichters, eines Wärmetauschers oder eines Kondensators und mit zusätzlicher Hilfe einer Wärmepumpe und/oder einer Primärenergiequelle erwärmt werden. Hier ist der Wirkungsgrad des Brüdenverdichters beziehungsweise der Wärmepumpe wegen der gegenüber der ersten Temperatur höheren zweiten Temperatur jedoch schlechter. Wenn sowieso zusätzliche Primärenergie von außen zugeführt werden muss, bietet es sich an, eine entsprechende Primärenergiequelle zur Erwärmung in der zweiten Verdampfungsstufe einzusetzen.

Die erste Teilmenge des verdampften ersten Anteils kann bei dem erfindungsgemäßen Verfahren unter einem oberen Kolonnenboden in die Rektifikationskolonne zurückgeführt werden, während die zweite Teilmenge des verdampften ersten Anteils unter einem unteren Kolonnenboden in die Rektifikationskolonne zurückgeführt wird. Es handelt sich dabei häufig nicht um den allerobersten beziehungsweise den alleruntersten Kolonnenboden, und die genaue Lage der Zurückführung der ersten beziehungsweise der zweiten Teilmenge des verdampften ersten Anteils der aus der Rektifikationskolonne abgelaufenen Flüssigkeit in Bezug auf die Anzahl der noch darüberliegenden oder darunterliegenden Kolonnen Böden hängt auch davon ab, wie viele Kolonnenböden insgesamt in der Rektifikationskolonne vorhanden sind.

Das zu trennende Gemisch kann der Rektifikationskolonne in einem mittleren Bereich zugeführt werden. Das Gemisch kann so, wie es aus dem Stand der Technik bekannt ist, mit der Restwärme eines Wärmeübertragungsmediums vorgewärmt werden, bevor es in die Rektifikationskolonne eingeleitet wird. Die genaue Lage des mittleren Bereichs muss nicht die exakte Mitte der Rektifikationskolonne in Bezug auf die Gesamtzahl ihrer Kolonnenböden sein. Die Zuleitung erfolgt aber typischerweise oberhalb der Rückführung der zweiten Teilmenge und unterhalb der Rückführung der ersten Teilmenge des verdampften ersten Anteils der unten aus der Rektifikationskolonne abgelaufenen Flüssigkeit.

Eine Vorrichtung zur Trennung eines einen Leichtsieder und einen Schwersieder umfassenden Gemisches gemäß dem erfindungsgemäßen Verfahren weist eine Rektifikationskolonne, einen Verdampfer, der einen unten an die Rektifikationskolonne angeschlossenen Flüssigkeitszulauf, eine an die Rektifikationskolonne angeschlossene Dampfrückführung und einen Abzug für den nicht verdampften Schwersieder umfasst, und einen oben an die Rektifikationskolonne angeschlossenen Dampfabzug auf. Die Rektifikationskolonne weist mehrere Kolonnenböden auf und kann im Detail auf irgendeine dem Fachmann bekannte Weise ausgeführt sein. Über den oben an die Rektifikationskolonne angeschlossenen Dampfabzug kann der Leichtsieder als Dampf abgezogen werden. Dabei kann ein Kondensator den über den Dampfabzug aus der Rektifikationskolonne austretenden Dampf kondensieren. Die Kondensation kann stufenweise, das heißt bei abnehmenden Temperaturen erfolgen, und als der Leichtsieder kann das erst bei der tiefsten Temperatur anfallende Kondensat abgezogen werden, während das schon bei höheren Temperaturen in dem Kondensator kondensierenden Kondensat in die Rektifikationskolonne zurückgeführt wird. Dies sind bekannte Ausgestaltungen einer Vorrichtung mit einer Rektifikationskolonne. Erfindungsgemäß ist der Verdampfer für die unten aus der Rektifikationskolonne ablaufende Flüssigkeit, die auch als Sumpf bezeichnet wird, ausgebildet. Dabei weist der Verdampfer eine erste Verdampfungszone mit einem ersten Wärmeübertrager auf, um die aus der Rektifikationskolonne über den Flüssigkeitszulauf in den Verdampfer eintretende Flüssigkeit bis auf die erste Temperatur zu erwärmen, wobei die erste Teilmenge der Flüssigkeit verdampft. Stromab der ersten Verdampfungszone weist der Verdampfer eine zweite Verdampfungszone mit einem zweiten Wärmeübertrager auf, um die am Ende der ersten Verdampfungszone verbleibende Flüssigkeit bis auf die zweite Temperatur zu erwärmen, die höher ist als die erste Temperatur, wobei die zweite Teilmenge der Flüssigkeit verdampft. Der am Ende der zweiten Verdampfungszone verbleibende, nicht verdampfte Rest der Flüssigkeit, der in den Flüssigkeitsabzug gelangt, ist der Schwersieder. Eine erste Rückführleitung der Dampfrückführung für die erste Teilmenge der Flüssigkeit aus der ersten Verdampfungszone führt in den oberen Bereich der Rektifikationskolonne. Eine zweite Rückführleitung der Dampfrückführung für die zweite Teilmenge der Flüssigkeit aus der zweiten Verdampfungszone führt in den unteren Bereich der Rektifikationskolonne, der um mindestens einen Kolonnenboden tiefer liegt als der obere Bereich der Rektifikationskolonne. Typischerweise liegt der untere Bereich wie schon ausgeführt um mindestens zwei oder mehr Kolonnenböden und vielfach um die Hälfte der Gesamtzahl der Kolonnenböden der Rektifikationskolonne tiefer als der obere Bereich der Rektifikationskolonne.

Die beiden Verdampfungszonen des Verdampfers der erfindungsgemäßen Vorrichtung, in denen die Flüssigkeit zunächst auf die erste und dann auf die höhere zweite Temperatur erwärmt wird, um deren erste und dann deren zweite Teilmenge zu verdampfen sind vorzugsweise zwei bezüglich ihrer Funktion getrennte Einheiten des Verdampfers. So kann die erste Verdampfungszone einen ersten Wärmeübertrager aufweisen, der nicht an dieselbe Wärmequelle für dasselbe Wärmeübertragungsmedium angeschlossen ist, wie ein Wärmeübertrager der zweiten Verdampfungszone. Konkret kann die erste Verdampfungszone einen an eine erste Wärmequelle für ein erstes kondensierendes Wärmeübertragungsmedium angeschlossenen ersten Wärmeübertrager aufweisen. Wenn dann die zweite Verdampfungszone einen an eine zweite Wärmequelle für ein zweites kondensierendes Wärmeübertragungsmedium angeschlossenen zweiten Wärmeübertrager aufweist, ist die zweite Wärmequelle anders ausgebildet als die erste Wärmequelle und/oder weist das zweite Wärmeübertragungsmedium eine andere Zusammensetzung und/oder einen höheren Druck auf als das erste Wärmeübertragungsmedium. Die zweite Verdampfungszone kann aber auch einen ganz anderen Wärmeübertrager, beispielsweise einen solchen mit einer Wärmequelle in Form eines Widerstandsheizelements, das heißt mit einer elektrischen Direktbeheizung, aufweisen.

In jedem Fall wird die erste Wärmequelle typischerweise für eine erste Heizleistung ausgelegt sein, die mindestens so groß ist wie eine zweite Heizleistung, für die die zweite Wärmequelle ausgelegt ist. Vorzugsweise ist die erste Heizleistung mindestens doppelt so groß wie die zweite Heizleistung und mehr bevorzugt mindestens dreimal so groß. Alternativ oder zusätzlich ist eine erste Wärmeübertragungsfläche des ersten Wärmeübertragers mindestens dreimal und vorzugsweise sogar mindestens zehnmal so groß wie eine zweite Wärmeübertragungsfläche des zweiten Wärmeübertragers. Maximal liegt das Verhältnis der ersten Wärmeübertragungsfläche zu der zweiten Wärmeübertragungsfläche bei etwa 1:25, in der Regel bei maximal 1:12.

Die erste Wärmequelle kann konkret einen an den Dampfabzug angeschlossenen ersten Brüdenverdichter oder ersten Wärmetauscher oder ersten Kondensator, optional in Verbindung mit einer ersten Wärmepumpe, aufweisen. Die zweite Wärmequelle kann entsprechend einen an den Dampfabzug angeschlossenen zweiten Brüdenverdichter oder zweiten Wärmetauscher oder zweiten Kondensator, optional in Kombination mit einer zweiten Wärmepumpe, aufweisen. Auch ein Brüdenverdichter erhöht die Temperatur der verdichteten Brüden, das heißt den über den Dampfabzug aus der Rektifikationskolonne abgezogenen Dampf nach dem Prinzip einer Wärmepumpe, so dass er die in dem abgezogenen Dampf enthaltene Wärmeenergie auf eine höhere Temperatur überführt. Dabei ist der Wirkungsgrad sowohl des Brüdenverdichters als auch jeder anderen Wärmepumpe von der Temperaturdifferenz zwischen der Anfangstemperatur und der Endtemperatur des Pumpvorgangs abhängig, und er sinkt mit Zunahme der Temperaturdifferenz. Hierauf basiert die bei der Erfindung durch die niedrigere erste Temperatur in der ersten Verdampfungszone erreichte Energieeinsparung.

Die erste Verdampfungszone und die zweite Verdampfungszone können in einem gemeinsamen Behälter des Verdampfers durch eine Wärmeisolationswand mit einem Flüssigkeitsüberlaufspalt für die am Ende der ersten Verdampfungszone verbleibende nicht verdampfte Flüssigkeit voneinander getrennt sein. Alternativ kann die erste Verdampfungszone in einem ersten Behälter des Verdampfers ausgebildet sein, während die zweite Verdampfungszone in einem separaten zweiten Behälter des Verdampfers ausgebildet ist. Dann ist für die am Ende der ersten Verdampfungszone verbleibende Flüssigkeit eine von dem ersten zu dem zweiten Behälter führende Überlaufleitung vorzusehen.

Bei dieser Gelegenheit ist darauf hinzuweisen, dass der Verdampfer der erfindungsgemäßen Vorrichtung mehr als zwei Verdampfungszonen mit unterschiedlichen Temperaturen aufweisen kann und dass das erfindungsgemäße Verfahren entsprechend in mehr als zwei Verdampfungsstufen auf unterschiedlichen Temperaturen durchgeführt werden kann. Die hiermit zusätzlich erreichbarer Energieeinsparung kann zum Beispiel gerechtfertigt sein, wenn das zu trennende Gemisch neben dem Leichtsieder und dem Schwersieder noch mindestens eine weitere Substanz aufweist, die eine dazwischen liegende Siedetemperatur aufweist und die entsprechend in dem Verdampfer besonders effizient in einer weiteren Verdampfungszone bei einer etwas über ihrer Siedetemperatur liegenden und sich sowohl von der ersten als auch der zweiten Temperatur der ersten und der der zweiten Verdampfungszone unterscheidenden weiteren Temperatur aus der Flüssigkeit heraus verdampft wird.

In der erfindungsgemäßen Vorrichtung mündet die erste Rückführleitung für die erste Teilmenge der Flüssigkeit unter einem oberen Kolonnenboden in den oberen Bereich der Rektifikationskolonne, während die zweite Rückführleitung unter einem unteren Kolonnenboden in den unteren Bereich der Rektifikationskolonne einmündet. Eine Zuführleitung für das selbst nach Vorerwärmung regelmäßig in flüssiger Form zugeleitete Gemisch mündet über einem mittleren Kolonnenboden in den dazwischen liegenden mittleren Bereich der Rektifikationskolonne.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Kondensator die Rede ist, ist dies so zu verstehen, dass genau ein Kondensator, zwei Kondensatoren oder mehr Kondensatoren vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist ein Funktionsschaltbild einer erfindungsgemäßen Vorrichtung, das zugleich das erfindungsgemäße Verfahren illustriert.
- **Fig. 2**: ist ein schematischer Längsschnitt durch einen Verdampfer der Vorrichtung gemäß Fig. 1 in einer ersten konkreten Ausführungsform.
- **Fig. 3**: ist eine Seitenansicht des Verdampfers gemäß Fig. 2.
- **Fig. 4**: ist ein schematischer Längsschnitt durch den Verdampfer der Vorrichtung gemäß Fig. 1 in einer zweiten konkreten Ausführungsform.

### FIGURENBESCHREIBUNG

Die Rektifikation, auch als Gegenstromdestillation bezeichnet, ist ein Verfahren zur Trennung von Gemischen von zwei oder mehr Stoffen. Dabei wird ein Leichtsieder, das heißt ein Stoff mit einem niedrigeren Siedepunkt, in dampfförmigem Zustand am oberen Ende, dem so genannten Kopf, der Rektifikationskolonne abgezogen, während sich ein Schwersieder, das heißt ein Stoff mit einem höheren Siedepunkt, am unteren Ende, dem sogenannten Sumpf, der Rektifikationskolonne konzentriert. Die hier ablaufende Flüssigkeit wird in einem Verdampfer teilweise verdampft, um noch enthaltenen Leichtsieder von dem Schwersieder zu entfernen. Der verdampfte Anteil wird in die Rektifikationskolonne zurückgeführt und der nicht verdampfte Anteil wird als der Schwersieder abgezogen. In dem Verdampfer wird die für den Betrieb der Rektifikationskolonne benötigte Wärmeenergie bereitgestellt. Das in dem Verdampfer einzustellende Temperaturniveau hängt von dem zu trennenden Gemisch sowie dem Druck ab, bei dem die Trennung optimal möglich ist. Um die Effizienz der Bereitstellung der Wärmeenergie für den Verdampfer zu optimieren, wird gemäß der vorliegenden Erfindung ein Verdampfer mit mindestens zwei Verdampfungszonen auf unterschiedlichen Temperaturen eingesetzt.

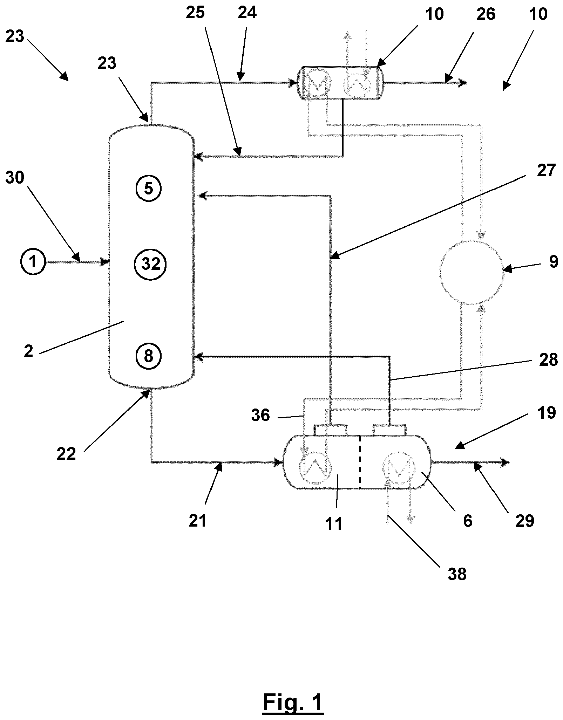

Bei der in **Fig. 1** dargestellten Vorrichtung 20 ist ein zweistufiger Verdampfer 19 über einen Flüssigkeitszulauf 21 an den Sumpf 22 einer Rektifikationskolonne 2 mit einer Mehrzahl von hier nicht dargestellten Kolonnenböden angeschlossen. An den Kopf 23 der Rektifikationskolonne 2 ist ein Dampfabzug 24 angeschlossen, der zu einem Kondensator 10 führt. Für einen Teil des kondensiertes Kondensat aus dem Kondensator 10 ist eine Kondensatrückführleitung 25 in die Rektifikationskolonne 2 vorgesehen. Der Leichtsieder 26 wird als zuletzt kondensierender oder schwerkondensierender Anteil aus dem Kondensator 10 abgezogen. Eine erste Verdampfungszone 11 des Verdampfers 19, in die Flüssigkeit aus dem Sumpf 22 der Rektifikationskolonne 2 zuerst gelangt, wird mit Hilfe einer Wärmepumpe 9 mit Abwärme des Kondensators 10 auf eine erste Temperatur aufgeheizt. Diese erste Temperatur liegt nur wenig über der Siedetemperatur des Leichtsieders 26 und damit der Temperatur, bei der die Abwärme des Kondensators 10 zur Verfügung steht. Die Wärmepumpe weist daher eine sehr hohe Effizienz, das heißt einen sehr hohen COP, auf. Anders gesagt muss wenig Antriebsenergie für die Wärmepumpe 9 aufgebracht werden, um der ersten Verdampfungszone 27 des Verdampfers 19 viel Wärmeenergie aus dem Kondensator 10 bereitzustellen. Eine in der ersten Verdampfungszone 11 verdampfte Teilmenge der aus dem Sumpf 22 der Rektifikationskolonne 2 abgezogenen Flüssigkeit wird über eine erste Rückführleitung 27 in einen oberen Bereich 5 der Rektifikationskolonne 2 zurückgeführt. In einer zweiten Verdampfungszone 6 des Verdampfers 19 wird die verbliebende Flüssigkeit auf eine höhere zweite Temperatur erwärmt. Eine dabei verdampfte zweite Teilmenge der Flüssigkeit wird über eine zweite Rückführleitung 28 in einen unteren Bereich 8 der Rektifikationskolonne 2 zurückgeführt. Die am Ende der zweiten Verdampfungszone 6 unverdampfte Flüssigkeit wird als Schwersieder 29 abgezogen. In Fig. 1 ist nicht dargestellt, von welcher Wärmequelle der zweiten Verdampfungszone 6 Wärmeenergie zugeführt wird. Die Wärmequelle kann grundsätzlich ebenfalls der Kondensator 10 in Verbindung mit einer weiteren Wärmepumpe sein, die aber auf Grund der höheren zweiten Temperatur, auf die die Flüssigkeit in der zweiten Verdampfungszone 6 erwärmt wird, einen grundsätzlich schlechteren COP aufweist als die Wärmepumpe 9, die die Temperatur der Abwärme des Kondensators 10 nur wenig auf die erste Temperatur anheben muss. Das aufzutrennende Gemisch 1 wird der Rektifikationskolonne über einen Zulauf 30 zugeführt, der in einem mittleren Bereich 32 zwischen dem oberen Bereich 5 und dem unteren Bereich 8 in die Rektifikationskolonne einmündet.

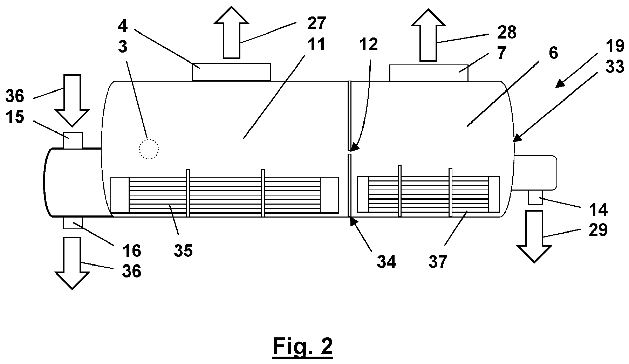

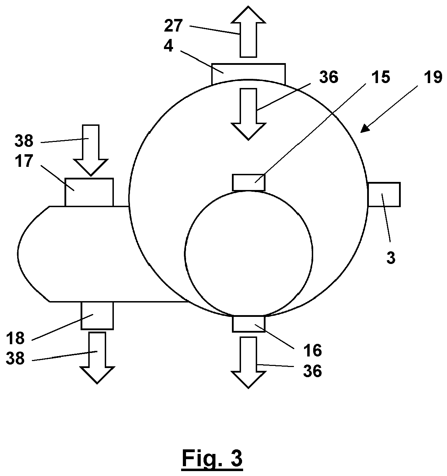

Der in den **Fig. 2** **und** **3** dargestellte Verdampfer 19 weist einen einzigen Behälter 33 auf, in dem die beiden Verdampfungszonen 11 und 6 durch eine Wärmeisolationswand 34 mit einem Flüssigkeitsüberlaufspalt 12 für in der ersten Verdampfungszone 11 noch nicht verdampfte Flüssigkeit getrennt sind. Über einen an den Flüssigkeitszulauf 21 gemäß Fig. 1 angeschlossenen Eintrittsstutzen 13 tritt die Flüssigkeit aus dem Sumpf 22 der Rektifikationskolonne 2 in die erste Verdampfungszone 11 ein. Sie gerät dort in Kontakt mit der Wärmeübertragungsfläche eines ersten Wärmeübertragers 34 und wird auf eine Temperatur etwas oberhalb der Siedetemperatur des Leichtsieders 26 erwärmt. Dazu wird dampfförmiges erstes Wärmeübertragungsmedium 36 über einen Eintrittsstutzen 15 zugeführt. Das dampfförmige erste Wärmeübertragungsmedium 36 kondensiert in dem Wärmeübertrager 35 und erwärmt so dessen Wärmeübertragungsfläche auf die Kondensationstemperatur. Das kondensierte erste Wärmeübertragungsmedium 36 läuft über einen Austrittsstutzen 16 zu der Wärmepumpe 9 zurück. Die in der ersten Verdampfungszone 11 verdampfte Teilmenge der Flüssigkeit tritt durch einen Dampfabzugstutzen 4 in die erste Rückführleitung 27 über. In der ersten Verdampfungszone 11 nicht verdampfte Flüssigkeit tritt über den Flüssigkeitsüberlaufspalt 12 in die zweite Verdampfungszone 6 über. In der zweiten Verdampfungszone 6 ist ein zweiter Wärmeübertrager 37 angeordnet, dem zum Erwärmen seiner Wärmeübertragungsfläche ein zweites Wärmeübertragungsmedium 38 über einen Eintrittsstutzen 17 als Dampf zugeführt wird. Das in dem zweiten Wärmeübertrager 37 kondensierte zweite Wärmeübertragungsmedium 38 wird über Austrittsstutzen 18 abgeführt. Die in der zweiten Verdampfungszone 6 verdampfte Teilmenge der Flüssigkeit wird über einen Dampfabzugsstutzen 7 und die daran angeschlossene Rückführleitung 28 in die Rektifikationskolonne 2 zurückgeführt. Der Schwersieder 29 wird über einen Flüssigkeitsabzug 14 am Ausgang des Verdampfers 19 abgezogen.

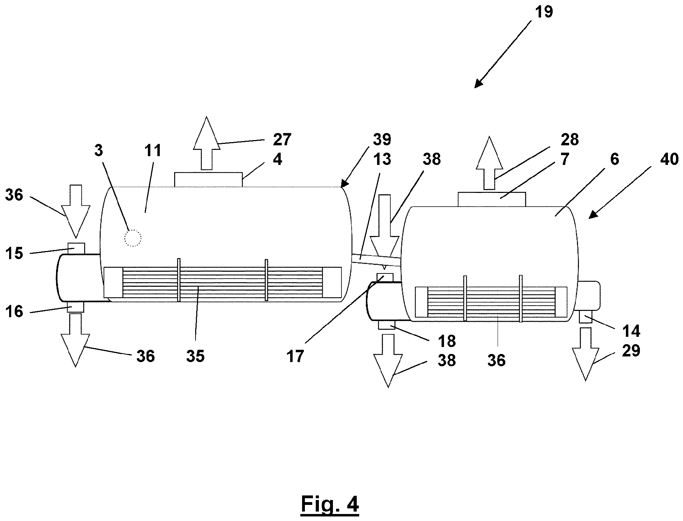

Bei der Ausführungsform des Verdampfers 19 gemäß **Fig. 4** mit zwei getrennten Behältern 39 und 40 tritt die in der ersten Verdampfungszone 11 noch nicht verdampfte Flüssigkeit über eine Überlaufleitung 13 aus dem ersten Behälter 39 in den zweiten Behälter 40 über. Die grundsätzliche Funktion des Verdampfers 19 ist dabei dieselbe wie bei der Ausführungsform gemäß den Fig. 2 und 3. Das Verhältnis der Größen der Wärmeübertragungsflächen des ersten Wärmeübertragers 35 in der ersten Verdampfungszone 11 und des zweiten Wärmeübertragers 37 in der zweiten Verdampfungszone 6 ist in den Figuren 2 und 4 nicht richtig dargestellt, es beträgt typischerweise zwischen 1:3 und 1;20, das heißt, der erste Wärmeübertrager 35 ist sehr viel größer als der zweite Wärmeübertrager 37.

Im Folgenden wird das erfindungsgemäße Verfahren anhand der Fig. 1 bis 4 für das Beispiel des Trennens eines Gemisches aus Wasser und Diethylether weiter beschrieben. Das Gemisch 1 tritt über die Zuführleitung 30 mit einer Temperatur von 20°C in den mittleren Bereich 32 der Rektifikationskolonne 2 ein. Das Gemisch rieselt über die Kolonnenböden in den Sumpf 22 der Kolonne und fließt von dort durch den Flüssigkeitszulauf 21 und den Eintrittsstutzen 3 in die erste Verdampfungszone 11. Dort wird die Flüssigkeit mit dem ersten Wärmeübertrager 35 in einer ersten Verdampfungsstufe auf eine erste Temperatur von 50°C, die oberhalb der Siedetemperatur des Leichtsieders Diethylether von 35°C liegt, erwärmt. Mit der dabei verdampfenden ersten Teilmenge der Flüssigkeit verdampfen ca. 95 % des Leichtsieders Diethylether. Dieser Dampf wird über den ersten Dampfabzugsstutzen 4 abgezogen und über die erste Rückführleitung 27 in den oberen Bereich 5 der Rektifikationskolonne 2 zurückgeführt. Die in der ersten Verdampfungsstufe nicht verdampfte Flüssigkeit gelangt durch den Flüssigkeitsüberlaufspalt 12 beziehungsweise die Überlaufleitung 13 in die zweite Verdampfungszone 6. Da noch Leichtsieder in der Flüssigkeit enthalten ist, wird die Flüssigkeit in einer zweiten Verdampfungsstufe auf eine so viel höhere zweite Temperatur erwärmt, dass eine zweite Teilmenge der Flüssigkeit verdampft, die die restlichen 5 % des Leichtsieders umfasst. Der dabei entstehende Dampf wird über den zweiten Dampfabzugstutzen 7 abgezogen und über die zweite Rückführleitung 28 in den unteren Bereich der Rektifikationskolonne 2 zurückgeführt. Der reine Schwersieder 29 wird am Ende des Verdampfers 19 über den Flüssigkeitsabzug 14 abgeleitet. Eine große Effizienzsteigerung wird durch die erste Verdampfungsstufe in der ersten Verdampfungszone 11 erreicht, in der der erste Wärmeübertrager 35 mit Hilfe der Wärmepumpe 9 beheizt wird. Dabei wird der an den Kopf 23 der Rektifikationskolonne 2 angeschlossene Kondensator 10 als Wärmequelle benutzt, und der Temperaturhub der Wärmepumpe 9 von ca. 34°C auf 50°C bleibt klein, so dass eine hohe Effizienz und ein hoher COP der Wärmepumpe von ca. 8 erreicht werden. Alternativ wird der Wärmeübertrager 35 in der ersten Verdampfungszone 11 mittels eines Brüdenverdichters oder direkt mit Abwärme aus anderen Prozessen betrieben. Der zweite Wärmeübertrager 36 der zweiten Verdampfungszone 6 kann über eine zweite Wärmepumpe und/oder eine andere Wärmequelle beheizt werden. Wenn diese zweite Wärmepumpe ebenfalls mit dem Kondensator 10 als Wärmequelle arbeitet, muss ein deutlich größerer Temperaturhub von ca. 34°C auf 110°C realisiert werden, was einen deutlich schlechteren COP der Wärmepumpe von ca. 2 bedeutet. Im Vergleich zu einem einstufigen Verdampfer, der über eine Wärmepumpe mit dem Kondensator 10 als Wärmequelle bei 110°C betrieben wird, kann mit dem zweistufigen Verdampfer eine errechnete Energieeinsparung von 30 bis 80 % erreicht werden. Die konkrete Energieeinsparung ist abhängig von verschiedenen Randbedingungen. Hierzu zählen unter anderem die Stoffeigenschaften des Leichtsieders und des Schwersieders, die Stoffeigenschaften des Gemisches, die Masseanteile der Stoffe am Gemisch, die Bauart und die COPs der Wärmepumpen, die Dampftemperaturen und die Überhitzungstemperaturen der Flüssigkeiten. Zur Bewertung des Energieeinsparpotentials werden im Folgenden rechnerisch mehrere Varianten betrachtet, bei denen jeweils nur ein Parameter verändert wird. Dabei liegt die niedrigste Energieeinsparung bei ca. 30 % bei der Erhöhung des Masseanteils des Schwersieders von 26 % auf 60 %. Durch den direkten Einsatz von Abwärme in der ersten Verdampfungsstufe, das heißt ohne Verwendung einer Wärmepumpe, kann eine Energieeinsparung von 80 % erzielt werden. Insgesamt kann trotz großen Veränderungen der Parameter für jede Variante der Energieverbrauch gegenüber einem einstufigen Verdampfer um über 30 % gesenkt werden.

Alle folgenden Angaben, außer im Beispiel 4, das von einem Schwersieder mit einer Siedetemperatur von 150°C ausgeht, beziehen sich auf das Trennen von Wasser (Schwersieder) und Diethylether (Leichtsieder).

### Beispiel 1:

| | |
|---|---|
| Leichtsieder | 84 Gewichts% |
| Schwersieder | 16 Gewichts% |
| erste Temperatur | 40°C |
| zweite Temperatur | 110°C |
| Wärmequelle der erste Verdampfungsstufe: | Abwärme des Kondensators 10 von 30°C erhöht auf 45°C mit Wärmepumpe (COP 8) |
| Anteil der Wärmeenergiezufuhr | |
| zur ersten Verdampfungsstufe | 84 % |
| Wärmequelle der zweiten Verdampfungsstufe: | Abwärme des Kondensators 10 von 30°C erhöht auf 122°C mit Wärmepumpe (COP 2) |

Einsparung an elektrischer Energie im Vergleich zur Zufuhr von 100 % der Wärmeenergie in Form von Abwärme des Kondensators 10 von 30°C erhöht auf 122°C mit Wärmepumpe (COP 2): 64 %

### Beispiel 2:

| | |
|---|---|
| Leichtsieder | **40** Gewichts% |
| Schwersieder | **60** Gewichts% |
| erste Temperatur | 40°C |
| zweite Temperatur | 110°C |
| Wärmequelle der erste Verdampfungsstufe: | Abwärme des Kondensators 10 von 30°C erhöht auf 45°C mit Wärmepumpe (COP 8) |
| Anteil der Wärmeenergiezufuhr | |
| zur ersten Verdampfungsstufe | **50** % |
| Wärmequelle der zweiten Verdampfungsstufe: | Abwärme des Kondensators 10 von 30°C erhöht auf 122°C mit Wärmepumpe (COP 2) |

Einsparung an elektrischer Energie im Vergleich zur Zufuhr von 100 % der Wärmeenergie in Form von Abwärme des Kondensators 10 von 30°C erhöht auf 122°C mit Wärmepumpe (COP 2): **38** %

### Beispiel 3:

| | |
|---|---|
| Leichtsieder | 84 Gewichts% |
| Schwersieder | 16 Gewichts% |
| erste Temperatur | 40°C |
| zweite Temperatur | 110°C |
| Wärmequelle der erste Verdampfungsstufe: | Abwärme |
| Anteil der Wärmeenergiezufuhr | |
| zur ersten Verdampfungsstufe | 82 % |
| Wärmequelle der zweiten Verdampfungsstufe: | Abwärme des Kondensators 10 von 30°C erhöht auf 122°C mit Wärmepumpe (COP 2) |

Einsparung an elektrischer Energie im Vergleich zur Zufuhr von 100 % der Wärmeenergie in Form von Abwärme des Kondensators 10 von 30°C erhöht auf 122°C mit Wärmepumpe (COP 2): 83 %

### Beispiel 4:

| | |
|---|---|
| Leichtsieder | 84 Gewichts% |
| Schwersieder | 16 Gewichts% |
| erste Temperatur | 40°C |
| zweite Temperatur | **167**°C |
| Wärmequelle der erste Verdampfungsstufe: | Abwärme des Kondensators 10 von 30°C erhöht auf 45°C mit Wärmepumpe (COP 8) |
| Anteil der Wärmeenergiezufuhr | |
| zur ersten Verdampfungsstufe | **76** % |
| Wärmequelle der zweiten Verdampfungsstufe: | Abwärme des Kondensators 10 von 30°C erhöht auf **172**°C mit Wärmepumpe (COP **1,6)** |

Einsparung an elektrischer Energie im Vergleich zur Zufuhr von 100 % der Wärmeenergie in Form von Abwärme des Kondensators 10 von 30°C erhöht auf **172**°C mit Wärmepumpe (COP **1,6): 61** %

### BEZUGSZEICHENLISTE

- 1: Gemisch
- 2: Rektifikationskolonne
- 3: Eintrittsstutzen
- 4: erster Dampfabzugsstutzen
- 5: oberer Bereich der Rektifikationskolonne 2
- 6: zweite Verdampfungszone
- 7: Gasabzugsstutzen
- 8: unterer Bereich der Rektifikationskolonne 2
- 9: Wärmepumpe
- 10: Kondensator
- 11: erste Verdampfungszone
- 12: Flüssigkeitsüberlaufspalt
- 13: Überlaufleitung
- 14: Flüssigkeitsabzug
- 15: Eintrittsstutzen
- 16: Austrittsstutzen
- 17: Eintrittsstutzen
- 18: Austrittsstutzen
- 19: Verdampfer
- 20: Vorrichtung
- 21: Flüssigkeitszulauf
- 22: Sumpf der Rektifikationskolonne 2
- 23: Kopf der Rektifikationskolonne 2
- 24: Dampfabzug
- 25: Kondensatrückführleitung
- 26: Leichtsieder
- 27: erste Rückführleitung
- 28: zweite Rückführleitung
- 29: Schwersieder
- 30: Zuführleitung
- 32: mittlerer Bereich der Rektifikationskolonne 2
- 33: Behälter
- 34: Wärmeisolationswand
- 35: erster Wärmeübertrager
- 36: erstes Wärmeübertragungsmedium
- 37: zweiter Wärmeübertrager
- 38: zweites Wärmeübertragungsmedium
- 39: Behälter
- 40: Behälter

## Patentansprüche

1. Verfahren zur Trennung eines einen Leichtsieder (26) und einen Schwersieder (29) umfassenden Gemisches (1) unter Verwendung einer Rektifikationskolonne (2),
- wobei ein erster Anteil einer unten aus der Rektifikationskolonne (2) abgelaufenen Flüssigkeit verdampft und der verdampfte Anteil in die Rektifikationskolonne (2) zurückgeführt wird,
- wobei ein nicht verdampfter zweiter Anteil der abgelaufenen Flüssigkeit als der Schwersieder (29) abgezogen wird und
- wobei zumindest ein schwerkondensierender Anteil eines oben aus der Rektifikationskolonne (2) austretenden Dampfs als der Leichtsieder (26) abgezogen wird,
**dadurch gekennzeichnet,**
- **dass** zum Verdampfen des ersten Anteils in einer ersten Verdampfungsstufe die abgelaufene Flüssigkeit bis auf eine erste Temperatur erwärmt wird, wobei eine erste Teilmenge des ersten Anteils verdampft, und in einer zweiten Verdampfungsstufe die am Ende der ersten Verdampfungsstufe verbliebene Flüssigkeit bis auf eine zweite Temperatur erwärmt wird, die um mindestens 10 K höher ist als die erste Temperatur, wobei eine zweite Teilmenge des ersten Anteils verdampft,
- wobei die erste Teilmenge des ersten Anteils in einen oberen Bereich (5) der Rektifikationskolonne (2) zurückgeführt wird und die zweite Teilmenge des ersten Anteils in einen unteren Bereich (8) der Rektifikationskolonne (2) zurückgeführt wird.

2. Verfahren nach Anspruch 1, **dadurch gekennzeichnet,**
- **dass** die erste Temperatur um 2 K bis 20 K über einer Siedetemperatur des Leichtsieders (26) liegt und/oder
- **dass** die zweite Temperatur um mindestens 25 K oder um mindestens 50 K höher ist als die erste Temperatur.

3. Verfahren nach Anspruch 1 oder 2, **dadurch gekennzeichnet,**
- **dass** der abgelaufenen Flüssigkeit in der ersten Verdampfungsstufe eine erste Wärmeenergiemenge zugeführt wird, die mindestens genau so groß ist wie eine zweite Wärmeenergiemenge, die der am Ende der ersten Verdampfungsstufe verbliebenen Flüssigkeit in der zweiten Verdampfungsstufe zugeführt wird, und/oder
- **dass** die abgelaufene Flüssigkeit in der ersten Verdampfungsstufe über eine erste Wärmeübertragungsfläche erwärmt wird, die mindestens dreimal und vorzugsweise mindestens zehnmal so groß ist wie eine zweite Wärmeübertragungsfläche, über die die am Ende der ersten Verdampfungsstufe verbliebene Flüssigkeit in der zweiten Verdampfungsstufe erwärmt wird, und/oder
- **dass** der zweite Anteil der abgelaufenen Flüssigkeit in der ersten Verdampfungsstufe mindestens dreimal und vorzugsweise mindestens zehnmal so lange verweilt wie in der zweiten Verdampfungsstufe.

4. Verfahren nach einem der vorhergehenden Ansprüche, **dadurch gekennzeichnet, dass** die abgelaufene Flüssigkeit in der ersten Verdampfungsstufe mit Hilfe von Kondensationswärme eines ersten Wärmeübertragungsmediums (36) erwärmt wird und dass die am Ende der ersten Verdampfungsstufe verbliebene Flüssigkeit in der zweiten Verdampfungsstufe mit Hilfe von Kondensationswärme eines sich von dem ersten Wärmeübertragungsmedium (36) unterscheidenden zweiten Wärmeübertragungsmediums (39 erwärmt wird.

5. Verfahren nach einem der vorhergehenden Ansprüche, **dadurch gekennzeichnet, dass** die abgelaufene Flüssigkeit in der ersten Verdampfungsstufe mit Abwärme aus dem oben aus der Rektifikationskolonne (2) austretenden Dampf erwärmt wird.

6. Verfahren nach einem der vorhergehenden Ansprüche, **dadurch gekennzeichnet,**
- **dass** die abgelaufene Flüssigkeit in der ersten Verdampfungsstufe mit Hilfe eines ersten Brüdenverdichters, eines ersten Wärmetauschers oder eines ersten Kondensators (10) und optional mit Hilfe einer ersten Wärmepumpe (9) erwärmt wird und/oder
- **dass** die am Ende der ersten Verdampfungsstufe verbliebene Flüssigkeit in der zweiten Verdampfungsstufe mit Hilfe eines zweiten Brüdenverdichters, eines zweiten Wärmetauschers oder eines zweiten Kondensators und mit Hilfe einer zweiten Wärmepumpe und/oder einer Primärenergiequelle erwärmt wird.

7. Verfahren nach einem der vorhergehenden Ansprüche, **dadurch gekennzeichnet, dass** das Gemisch (1) in einen mittleren Bereich (32) der Rektifikationskolonne (2) zugeführt wird, der optional um mindestens einen Kolonnenboden tiefer liegt als der obere Bereich (5) der Rektifikationskolonne (2) und um mindestens einen Kolonnenboden höher liegt als der untere Bereich (8) der Rektifikationskolonne (2).

8. Vorrichtung (20) zur Trennung eines einen Leichtsieder (26) und einen Schwersieder (29) umfassenden Gemisches (1) gemäß dem Verfahren nach einem der vorhergehenden Ansprüche, mit
- einer Rektifikationskolonne (2),
- einem Verdampfer (19), der einen unten an die Rektifikationskolonne (2) angeschlossen Flüssigkeitszulauf (21), eine an die Rektifikationskolonne (2) angeschlossene Dampfrückführung und einen Flüssigkeitsabzug (14) für den nicht verdampften Schwersieder (29) aufweist, und
- einem oben an die Rektifikationskolonne (2) angeschlossenen Dampfabzug (24),
**dadurch gekennzeichnet,**
- **dass** der Verdampfer (19) eine erste Verdampfungszone (11) mit einem ersten Wärmeübertrager (35), um aus der Rektifikationskolonne (2) über den Flüssigkeitszulauf (21) in den Verdampfer (19) eintretende Flüssigkeit bis auf eine erste Temperatur zu erwärmen, wobei eine erste Teilmenge der Flüssigkeit verdampft, und stromab der ersten Verdampfungszone (11) eine zweite Verdampfungszone (6) mit einem zweiten Wärmeübertrager (37) aufweist, um die am Ende der ersten Verdampfungszone (11) verbleibende Flüssigkeit bis auf eine zweite Temperatur zu erwärmen, die höher ist als die erste Temperatur, wobei eine zweite Teilmenge der Flüssigkeit verdampft,
- wobei eine erste Rückführleitung (27) der Dampfrückführung für die erste Teilmenge der Flüssigkeit aus der ersten Verdampfungszone (11) in einen oberen Bereich (5) der Rektifikationskolonne (2) führt und eine zweite Rückführleitung (28) der Dampfrückführung für die zweite Teilmenge der Flüssigkeit aus der zweiten Verdampfungszone (6) in einen unteren Bereich (8) der Rektifikationskolonne (2) führt.

9. Vorrichtung (20) nach Anspruch 8, **dadurch gekennzeichnet,**
- **dass** der erste Wärmeübertrager (35) an eine erste Wärmequelle für ein erstes kondensierendes Wärmeübertragungsmedium (36) angeschlossen ist und
- **dass** der zweite Wärmeübertrager (37) an eine zweite Wärmequelle angeschlossen ist,
- wobei die zweite Wärmequelle optional ein zweites kondensierendes Wärmeübertragungsmedium (38) bereitstellt, wobei die zweite Wärmequelle anders ausgebildet ist als die erste Wärmequelle und/oder das zweite Wärmeübertragungsmedium (39) eine andere Zusammensetzung und/oder einen höheren Druck aufweist als das erste Wärmeübertragungsmedium (36).

10. Vorrichtung (20) nach Anspruch 9, **dadurch gekennzeichnet,**
- **dass** die erste Wärmequelle für eine erste Heizleistung ausgelegt ist, die mindestens so groß ist wie eine zweite Heizleistung, für die die zweite Wärmequelle ausgelegt ist, und/oder
- **dass** eine erste Wärmeübertragungsfläche des ersten Wärmeübertragers (35) mindestens dreimal und vorzugsweise mindestens zehnmal so groß ist wie eine zweite Wärmeübertragungsfläche des zweiten Wärmeübertragers (37).

11. Vorrichtung (20) nach Anspruch 9 oder 10, **dadurch gekennzeichnet,**
- **dass** die erste Wärmequelle einen an den Dampfabzug (24) angeschlossenen ersten Brüdenverdichter oder ersten Wärmetauscher oder ersten Kondensator (10) und optional eine erste Wärmepumpe (9) aufweist und/oder
- **dass** die zweite Wärmequelle einen an den Dampfabzug angeschlossenen zweiten Brüdenverdichter oder zweiten Wärmetauscher oder zweiten Kondensator optional eine zweite Wärmepumpe aufweist.

12. Vorrichtung (20) nach einem der Ansprüche 9 bis 11, **dadurch gekennzeichnet,**
- **dass** die erste Verdampfungszone (11) und die zweite Verdampfungszone (6) in einem Behälter (33) des Verdampfers (19) durch eine Wärmeisolationswand (34) mit einem Flüssigkeitsüberlaufspalt (12) voneinander getrennt sind oder
- **dass** die erste Verdampfungszone (11) in einem ersten Behälter (39) des Verdampfers (19) ausgebildet ist und die zweite Verdampfungszone (6) in einem separaten zweiten Behälter (40) des Verdampfers ausgebildet ist.

13. Vorrichtung (20) nach einem der Ansprüche 8 bis 12, **dadurch gekennzeichnet, dass** die eine Zuführleitung (30) für das Gemisch (1) in einen mittleren Bereich (32) der Rektifikationskolonne (2) mündet, der optional um mindestens einen Kolonnenboden tiefer liegt als der obere Bereich (5) der Rektifikationskolonne (2) und um mindestens einen Kolonnenboden höher liegt als der untere Bereich (8) der Rektifikationskolonne (2).
